# EUROPEAN PATENT APPLICATION

(11) **EP 4 261 918 A1**
(43) Date of publication of application: **18.10.2023**
(21) Application number: 22899616.1
(22) Date of filing: 14.01.2022
(51) Int. Cl.: H01M 4/04

(54) **MULTILAYER ELECTRODE SHEET, AND NEGATIVE ELECTRODE, BATTERY, AND ELECTRICAL APPARATUS USING SAME**

(71) Applicant: Contemporary Amperex Technology Co., Limited, Ningde City, Fujian 352100 (CN)
(72) Inventor: LUO, Fang, Ningde Fujian 352100 (CN); CHE, Huan, Ningde Fujian 352100 (CN); CHEN, Wei, Ningde Fujian 352100 (CN); LI, Shisong, Ningde Fujian 352100 (CN)
(74) Representative: Ziebig Hengelhaupt Intellectual Property Attorneys Patentanwaltskanzlei PartGmbB
(86) International application number: PCT/CN2022/071908
(87) International publication number: WO 2023/133780

(57) **Abstract**

The present application discloses an electrode plate for a battery, a battery and a power consuming device. The electrode plate for a battery comprises: a substrate, at least one binding layer and at least one barrier layer laminated in sequence on the substrate, wherein the binding layer and the barrier layer are distributed alternately in the thickness direction; the binding layer comprises a first binder; and the barrier layer comprises a multi-component copolymer different from the first binder and an optional second binder, identical to or different from the first binder in the binding layer, wherein the multi-component copolymer is preferably a linear multi-component copolymer.

## Description

### Technical Field

The present application relates to the fields of batteries, and in particular to a multilayer electrode plate and a negative electrode using same, a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and being environmentally friendly. For the electric vehicles, the secondary battery technology is an important factor to their development.

In the secondary batteries, a multilayer electrode plate at least comprising a substrate, an active material layer containing a binder in sequence is widely used. In the manufacture of a multilayer electrode plate, the binder comprised in the active material layer may migrate towards the surface of the electrode plate, resulting in reduced binding strength in the electrode plate. In the prior art (CN 113351450 A), in order to solve such problems, it is proposed that slurries with different binder contents are coated on the substrate in multiple portions at a relatively low coating speed, to form a binding layer. However, at a high coating speed, these problems are not fully solved.

### Summary of the Invention

In view of the above problems, the present application provides a multilayer electrode plate, which solves the problem that the binder migrates away from the substrate under high-speed coating, resulting in a decrease in the binding strength of the electrode plate.

In one aspect of the present application, provided is a multilayer electrode plate, wherein the multilayer electrode plate comprises a substrate, at least one binding layer and at least one barrier layer laminated in sequence on the substrate, wherein the binding layer and the barrier layer are distributed alternately in the thickness direction of the multilayer electrode plate; the binding layer comprises a first binder; and the barrier layer comprises a multi-component copolymer different from the first binder and an optional second binder, identical to or different from the first binder.

In the technical solution of the embodiment in the present application, the binding layer differs from the barrier layer in that the barrier layer comprises a multi-component copolymer different from the first binder, by the alternate distribution of the binding layer and the barrier layer in the thickness direction of the electrode plate, the multi-component copolymer can prevent the first binder from migrating across the barrier layer towards the direction away from the substrate; thus, even though a high-speed coating manufacturing method is used to prepare the electrode plate, the first binder can also be inhibited from getting away from the substrate, improving the binding strength between the binding layer and the substrate, and thus inhibiting the reduction in binding strength in the electrode plate. In some embodiments, the multi-component copolymer is a linear multi-component copolymer which is formed by co-polymerization with acrylonitrile, acrylic acid, allyl ester, etc., as a monomer. Thus, the migration of the first binder across the barrier layer can be well restricted.

In some embodiments, the multilayer electrode plate comprises one said binding layer and one said barrier layer, with one said binding layer and one said barrier layer being provided on the substrate in sequence. By providing one binding layer and one barrier layer, and providing the binding layer and the barrier layer on the substrate in sequence, the first binder is inhibited from migrating away from the substrate, and thus inhibiting the reduction in binding strength in the electrode plate, while simplifying the manufacturing process for the electrode plate.

In some embodiments, the first binder and the second binder are selected from at least one of styrene-butadiene rubber polymers and styrene-propadiene rubber polymers. Thus, sufficient binding strength with the substrate can be ensured.

In some embodiments, in the binding layer, the first binder has a content of 0.5 - 3.2 wt%, preferably 1.3 - 1.8 wt%.

In some embodiments, in the barrier layer, the multi-component copolymer has a content of 0.5 - 3.2 wt%, preferably 1.3 - 2.6 wt%; when the optional second binder is comprised, the multi-component copolymer and the optional second binder have a total content of 0.5 - 3.2 wt%, preferably 1.3 - 2.6 wt%. Thus, the reduction in binding strength in the electrode plate can be further inhibited.

In some embodiments, a ratio of addition amount (%) of the first binder in the binding layer, relative to the total addition amount (%) of the multi-component copolymer and the optional second binder in the barrier layer, is 0.5 : 2.6 - 3.0 : 0.1, optionally1.8 : 1.3. Thus, the reduction in binding strength in the electrode plate can be further inhibited.

In some embodiments, the coating weight ratio of the binding layer to the barrier layer is 3 : 7 - 7: 3, optionally, 4 : 6 - 6 : 4. Thus, the reduction in binding strength in the electrode plate can be further inhibited.

In some embodiments, in the barrier layer, the addition amount ratio of the multi-component copolymer to the second binder is 1 or more, optionally 2.5 or more. Thus, the migration of the first binder across the barrier layer can be further restricted.

In another aspect of the present invention, provided is a negative electrode, comprising a multilayer electrode plate in the above embodiments.

In another aspect of the present invention, provided is a secondary battery, comprising a negative electrode in the above embodiments.

In another aspect of the present invention, provided is a battery module, comprising a secondary battery described above.

In another aspect of the present invention, provided is a battery pack, comprising a battery module described above.

In another aspect of the present invention, provided is a power consuming device, comprising a secondary battery described above, a battery module described above or a battery pack described above. The secondary battery, the battery module, and the battery pack are all used for providing electrical energy.

The aforementioned description is only an overview of the technical solutions of the present application. In order to more clearly understand the technical means of the present application to implement same according to the contents of the specification, and in order to make the aforementioned and other objects, features and advantages of the present application more obvious and understandable, specific embodiments of the present application are exemplarily described below.

### Brief Description of the Drawings

Various other advantages and benefits will become apparent to those of ordinary skill in the art upon reading the following detailed description of preferred embodiments. The drawings are merely for the purpose of illustrating the preferred embodiments and are not to be construed as limiting the present application. Moreover, like components are denoted by like reference numerals throughout the drawings. In the drawings:
Fig. 1 is a schematic structural diagram of a multilayer electrode plate according to some embodiments of the present application;
Fig. 2 is a schematic structural diagram of a multilayer electrode plate according to some embodiments of the present application;
Fig. 3 is a schematic structural diagram of a multilayer electrode plate according to some embodiments of the present application;
Fig. 4 is a graph schematically illustrating the determination method for the binder and the multi-component copolymer in the binding layer and barrier layer of the electrode plate;
Fig. 5 is a schematic diagram of a secondary battery according to some embodiments of the present application;
Fig. 6 is an exploded schematic diagram of a secondary battery according to some embodiments of the present application;
Fig. 7 is a schematic diagram of a battery module according to some embodiments of the present application;
Fig. 8 is a schematic diagram of a battery pack according to some embodiments of the present application;
Fig. 9 is an exploded schematic diagram of a battery pack according to some embodiments of the present application; and
Fig. 10 is a power consuming device according to some embodiments of the present application.

### Reference numerals in the embodiments:

1 battery pack; 2 upper case body; 3 lower case body; 4 battery module; 5 secondary battery; 11 first layer film region: binding layer; 12 second layer film region: barrier layer; 13 substrate; 14 the n^{th} layer film region: binding layer; 15 the m^{th} layer film region: barrier layer;

### Detailed Description of Embodiments

Embodiments of the technical solutions of the present application will be described in more detail below. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the technical features modified thereby. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment may be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, representing that three relationships can exist, for example, A and/or B can include: the three instances of A alone, A and B simultaneously, and B alone. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

At present, from the perspective of the development of the market situation, the traction batteries are used more and more widely. The traction batteries are not only used in energy storage power systems such as hydroelectric power plants, thermal power plants, wind power plants and solar power plants, but also widely used in many fields, for example, in electric transportation means such as electric bicycles, electric motorcycles and electric vehicles. With the continuous expansion of the application field of traction batteries, the market demand for the traction batteries is also expanding.

The present inventor has noticed that the life of the electrode plate used in the battery will significantly affect that of the battery, so in order to obtain a high battery life, it is necessary to use a high-quality electrode plate. However, with the rapid growth of battery demand, it is urgent to improve the production efficiency of electrode plates.

In order to improve the production efficiency of the electrode plate, accelerating the coating speed of the materials forming the various layers in the electrode plate has a significant effect on the increase of speed and efficiency. However, the present inventors have found that as the coating speed increases, it becomes more difficult to inhibit the migration of the binder. Furthermore, there arises the problem of the reduction in binding strength.

In the process of preparing the electrode plate, a slurry in which a binder or the like is dispersed in a dispersion medium is usually coated on the substrate, and then dried to remove the dispersion medium to form a binding layer. In the dried electrode plate, the content of the binders in the "surface layer" of the binding layer potion and the "bottom layer" close to the substrate will be different due to migration. The content difference will be presented in the form of a concentration gradient.

As the reason for this concentration difference, it is generally believed that during the drying process, due to the effects of surface tension, capillary phenomenon, concentration difference, etc., a power by which the binder migrates (sometimes also referred to as "float") away from the substrate in the layer will spontaneously produces. The present inventors have found that this power is particularly significant during high-speed coating, and has a larger impact on the quality of the finished electrode plate product. The reason for this is not certain, but it is presumed that it is necessary to increase the temperature and air speed in the oven in order to satisfy the drying conditions during high-speed coating. At this time, the surface of the electrode plate becomes dry quickly, the tension difference between the inside and outside of the electrode plate increases, and the internal dispersion medium quickly rises to the surface, and the binder will migrate to the surface along with the molecules of the dispersion medium, which will present a binder migration increase.

In order to alleviate the problem of reduced binding strength, the present inventors have found that by providing a barrier layer comprising a multi-component copolymer on a binding layer and/or between multiple binding layers, the migration of the binder in the binding layer across the barrier layer can be prevented. Thus, the binder content in the binding layer near the substrate can be effectively reduced, and then the reduction in binding strength can be inhibited.

Therefore, in a first aspect, the present invention provides an electrode plate which improves the binding strength of the binding layer with a component, such as a substrate. The specific contents are as follows.

### 1. Electrode plate

The electrode plate of the present invention is an electrode plate for preparing a positive electrode or a negative electrode for a battery. The electrode plate comprises a substrate, a binding layer, a barrier layer, etc.

### 2. Substrate

The electrode plate of the present invention comprises a substrate, and the substrate is a current collector, which can be a current collector composed entirely of a conductive material or a composite current collector composed of a non-conductive material coated with a conductive material. The type of the substrate is not particularly limited in the present application, and any known substrate can be selected.

In some embodiments, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

### 3. Active materials

The electrode plate of the present invention includes an active substance, and the active substance directly or indirectly covers the substrate by the dispersion in the binding layer or barrier layer. In the present application, the type of the active substance is not particularly limited, and any known active substances can be included, such as carbon based-materials, sulfur-based materials, silicon-based materials, etc. It should be noted that the active material is a material participating in the current generating reaction in the positive electrode and the negative electrode of the battery.

In some embodiments, the positive active material may be a positive active material known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. LiCoO₂), lithium nickel oxide (e.g. LiNiO₂), lithium manganese oxide (e.g. LiMnO₂, LiMn₂O₄), lithium nickel cobalt oxide, lithium manganese cobalt oxide, lithium nickel manganese oxide, lithium nickel cobalt manganese oxide (e.g. LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (e.g. LiNi_{0.85}Co_{0.15}Al_{0.05}O₂), and modified compounds thereof, and the like. Examples of lithium-containing phosphates of olivine structure may include, but are not limited to, at least one of lithium iron phosphate (e.g. LiFePO₄ (also referred to as LFP)), lithium iron phosphate and carbon composites, lithium manganese phosphate (e.g. LiMnPO₄), lithium manganese phosphate and carbon composites, lithium iron manganese phosphate, and lithium iron manganese phosphate and carbon composites.

In some embodiments, the negative electrode active material can be a negative electrode active material known in the art for batteries. As an example, the negative electrode active material may include at least one of the following materials: synthetic graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

### 4. Binding layer

A binding layer is a layer comprising a first binder and an active substance, for binding the substrate with the active substance together. In the binding layer, the first binder has a content of 0.5 - 3.2 wt%, preferably 1.3 - 1.8 wt%.

In the binding layer, from the viewpoint of battery capacity, the higher the active material content, the better, for example 90 wt% or more, but from the viewpoint of binding strength, it is necessary to add a binder, etc., so the active substance has a content of 99 wt% or less, for example, 97.55 - 94.85 wt%.

In the binding layer, the binding layer closest to the substrate is referred to as the first binding layer; when there are multiple binding layers, in the direction from near to far from the substrate, the layers can be referred to as the second binding layer, the third binding layer, ......, the n^{th} binding layer. In such a case, n is preferably an integer of 1 - 5.

When there are multiple binding layers, the first binder contents in the various layers can be the same or different. The same first binder content in the various layers facilitates the simplification of the production line; when the first binder contents in the various layers are different, it is preferred that the first binder content in the binding layer close to the substrate is higher, and the first binder content in each layer becomes a gradient decrease as it moves away from the substrate; in such a way, even though the first binder migrates cross the layer, a sufficient binding strength between the binding layer and the substrate can be ensured.

In the binding layer, an auxiliary agent commonly used in the art can be moderately included, for example, a conductive material, a plasticizer, a dispersion medium, a dispersant, a surfactant and various additives, and the auxiliary agent is not particularly limited, as long as it does not affects the binding strength of the binding layer with the substrate and/or the active substance. The total content of the auxiliary agents can be 5 wt% or less, 4 wt% or less, 3 wt% or less, and 2 wt% or less, for example 1.95 wt%.

### 5. Barrier layer

The barrier layer comprises a multi-component copolymer different from the first binder in the binding layer and is a layer preventing the first binder from migrating across the layer. By providing the barrier layer on the binding layer and/or between multiple binding layers, the first binder in the binding layer can be prevented from migrating across the barrier layer. In the barrier layer, a second binder, identical to or different from the first binder, can be optionally included. By including a second binder, the cohesive force of the electrode plate can be improved, the roll sticking of the electrode plate during cold pressing is avoided, and the binding strength between them can be improved, facilitating the whole binding strength of the electrode plate.

In the barrier layer, the multi-component copolymer has a content of 0.5 - 3.2 wt%, preferably 1.3 - 2.6 wt%; when the optional second binder is comprised, the multi-component copolymer and the optional second binder have a total content of 0.5 - 3.2 wt%, preferably 1.3 - 2.6 wt%. When the multi-component copolymer content is too high, there will be problems, such as a poor electrode plate cohesive force, and roll sticking during cold pressing; when the content is too low, it is difficult to achieve the effect of preventing the first binder from migration. When the multi-component copolymer and the optional second binder have a too high total content, the amount of the active substance will be reduced, which is not conducive to the improvement of the battery capacity; when the total content is too low, the multi-component copolymer content is too low, and it is difficult to achieve the effect of preventing the first binder from migration.

In the barrier layer, a weight ratio of the multi-component copolymer to the second binder can be 1 or more, preferably 2.5 or more. Thus, the migration of the first binder across the barrier layer can be further restricted.

When multiple barrier layers are present, the contents of the multi-component copolymer and second binder can be the same or different in the various layers. The same content of the multi-component copolymer and second binder in the various layers facilitates the simplification of the production line.

The barrier layer can also comprise an active substance, and when the active substance is comprised, the active substance can be the same or different from that in the binding layer, but for the production efficiency, it may be the same as that in the binding layer. From the viewpoint of battery capacity, the active substance has a content of 90 wt% or more, and from the viewpoint of binding strength, the active substance has a content of 99 wt% or less, for example 97.55 - 94.85 wt%.

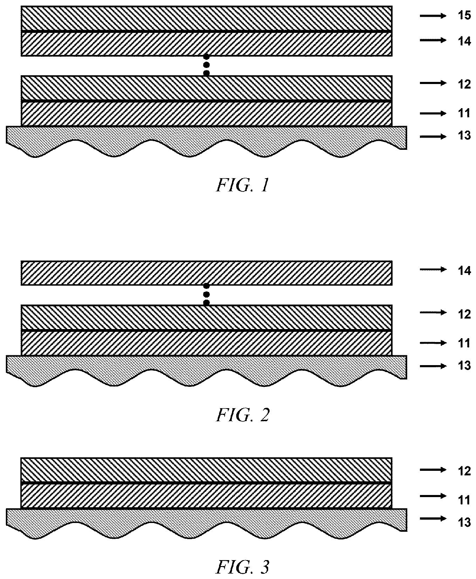

The barrier layer can be one or more layers. When multiple binding layers are present, the number of the barrier layers can be equal to that of the binding layers (Fig. 1), or one less that of the binding layers (Fig. 2). In addition, both the binding layer and the barrier layer can also be one layer (Fig. 3).

In the barrier layer, the barrier layer closest to the substrate is referred to as the first barrier layer; when there are multiple barrier layers, in the direction from near to far from the substrate, the layers can be referred to as the second barrier layer, the third barrier layer, ......, the m^{th} barrier layer. In such a case, m is an integer of 1 - 5.

In the barrier layer, an auxiliary agent commonly used in the art can be moderately included, for example, a conductive material, a plasticizer, a dispersion medium, a dispersant, a surfactant and various additives, and the auxiliary agent is not particularly limited, as long as it does not hinder the prevention of the migration of the first binder by the barrier layer and the binding strength thereof with the binding strength. The total content of the auxiliary agents can be 5 wt% or less, 4 wt% or less, 3 wt% or less, and 2 wt% or less, for example 1.95 wt%.

### 6. Multi-component copolymer

A multi-component copolymer is a polymer having a function to preventing the first binder from migration, and is a polymer different from the first binder. The multi-component copolymer is preferably a linear multi-component copolymer. By using the linear multi-component copolymer, it is possible to ensure a good effect of preventing the migration of the first binder with a small amount. The linear multi-component copolymer is further preferably obtained by co-polymerizaiton using acrylonitrile, acrylic acid, or allyl ester as a monomer, and optional monomers that can be copolymerized with the above-mentioned monomers if necessary.

The above-mentioned co-polymerization can be carried out according to a conventional method. For example, the monomer can be polymerized by anions, cations, radicals, etc. in a state where the monomer is dispersed in an inert dispersion medium such as a solution, an emulsion, or a suspension, or without dispersion medium. A catalyst can be suitably used during the co-polymerization. Conditions such as a polymerization temperature and time can be appropriately selected according to need. In addition, materials obtained by commercial means can also be used as the above-mentioned multi-component copolymer.

The principle that the multi-component copolymer can prevent the first binder from migration across the barrier layer (preventing flotation) is not certain, but it can be speculated that it is due to the differences in the properties, such as compatibility of the multi-component copolymer with the first binder, easy coating on the surface of the active material, etc., such that the first binder encounters a larger resistance force when it tries to pass the barrier layer, thereby exerting the effect of inhibiting the cross-layer migration of the first binder. In particular, since the barrier layer is dried earlier than the binding layer in inner side, a barrier layer can be formed earlier, and the cross-layer migration of the first binder (flotation) in the binding layer closer to the substrate than the barrier layer can be effectively inhibited. The effect of inhibiting cross-layer migration is more significant when multiple barrier layers are provided.

### 7. First binder and second binder

The first binder is a substance added to the slurry for forming the binding layer, to impart a binding property to the binding layer. The first binder is selected from at least one of styrene-butadiene rubber polymers (SBR), styrene-propadiene rubber polymers (SPR), preferably styrene-butadiene rubber polymers.

The second binder is an optional substance added to the slurry for forming the barrier layer, to improve the binding strength with the binder layer. The second binder is selected from at least one of styrene-butadiene rubber polymers (SBR), styrene-propadiene rubber polymers (SPR), preferably styrene-butadiene rubber polymers. When the barrier layer comprises a second binder, in view of the increase of the binding strength with the binding layer, the second binder can be the same substance as the first binder, or a different substance, preferably the same one. In the dried electrode plate, since the first binder in the binding layer and the second binder in the barrier layer both have a certain degree of migration in the direction towards each other, herebelow, the two binders in the dried electrode plate are collectively referred to as "binder", with their origin and type being not specifically distinguished.

### 8. Coating procedure

In the present invention, the electrode plate is manufactured by coating a slurry for forming a binding layer and a slurry for forming a barrier layer onto a substrate in sequence. The coating method is not limited, and the existing techniques and apparatus such as spray coating, dip coating, blade coating, roll coating, and extrusion coating can be used. Those skilled in the art can adjust the total thickness of the binding layer and the barrier layer on the substrate to a commonly controlled coating weight according to requirements, for example, more than 0.097 mg/mm².

During the coating, the substrate is coated with a slurry for forming the binding layer to form a first layer film region and a slurry for forming the barrier layer to form a second layer film region, in sequence. In the case of forming multiple binding layers and multiple barrier layers, slurries for forming both the binding layer and the barrier layer are coated repeatedly, until the respective desired numbers of layers are reached.

During the coating, the total number of layers of the binding layer and the barrier layer can be determined according to needs; a smaller total number of the layers facilitates the simplification of the apparatus, and a larger total number facilitates the inhibition of a too high concentration gradient of the binder in the layers, and thus facilitates the inhibition of the reduction of the binding strength. It should be noted that when the same slurry is continuously applied 2 times or more, the layers formed from the slurry are regarded as one layer, and when slurries of different compositions and/or concentrations are continuously applied 2 times or more, the layers formed from these slurries are regarded as different layers.

During the coating, the thickness of each layer can be determined as required, and the thickness of each layer may be appropriately set according to the required total thickness. The thicknesses of the various layers can be the same or different. Also, the coating thickness of each layer may be expressed as a fold relative to the thickness of a basic unit thickness. The thickness of the basic unit thickness can be appropriately set according to the required number of layers, total thickness and apparatus conditions in the manufacturing process. During the coating, a coating weight ratio of the total binding layers to the total barrier layers is 3 : 7 - 7 : 3, optionally 4 : 6 - 6 : 4. Thus, the reduction in binding strength in the electrode plate can be further inhibited. It should be noted that, in the case where there is no much difference in the density of the slurries for manufacturing the binding layer and the barrier layer, the coating amount can be controlled by controlling the coating thickness, etc. The coating thickness can be suitably controlled by those skilled in the art according to the coating method used and the characteristics of the apparatus.

During the coating, a ratio of the total weight of the first binder in all binding layers, relative to the total weight of the multi-component copolymer and the optional second binder in all barrier layers is 0.5 : 2.6 - 3.0 : 0.1, optionally 1.8 : 1.3. Thus, the reduction in binding strength in the electrode plate can be further inhibited.

### 9. Drying procedure

In the present invention, after each slurry is coated on the substrate, the substrate is placed into an oven for drying. During the drying process, volatile substances in the slurry, such as the dispersion medium, are removed to form an electrode plate with a multilayer structure on the surface of the substrate.

In the drying process, the electrode plate can be dried in a batch process using a box-type oven, or can be dried in a continuous process using a tunnel-type oven. However, from the viewpoint of production efficiency, it is preferred to use a tunnel-type oven to dry the electrode plate in a continuous manner.

The oven can be heated by means of a heating method using hot air, or a heating method using infrared, or other known heating methods. Further, it may be a combination of the above heating methods.

The temperature of the oven is appropriately set according to the substances used, and can be adjusted by those skilled in the art according to the heating method for the oven and the drying condition of the electrode plate. The lower limit of the temperature can be 70°C or more, 80°C or more, 90°C or more, 100°C or more, 110°C or more, 120°C or more, and 130°C or more, for example 140°C. The upper limit of the temperature of the oven is no more than the decomposition temperatures of the binder, substrate and various auxiliary agents used. A too high temperature easily results in the material aging, and a too low temperature can not achieve the high-speed production.

The drying time is appropriately set according to the materials used and the temperature of the oven, and the upper limit can be 600 sec or less, 500 sec or less, 400 sec or less, 300 sec or less, 240 sec or less, 180 sec or less, 120 or less, and 60 sec or less. The lower limit of the drying time is 1 sec or more, 2 sec or more, 3 sec or more, 5 sec or more, 7 sec or more, and 10 sec or more. A too short time can not achieve the sufficient drying of the electrode plate, and a too long time easily results in the material aging and can not achieve the high-speed production.

It should be noted that the present invention can also be achieved in a production line that does not use a high-speed coating, but preferably in a production line that uses high-speed coating.

In addition, the secondary battery, battery module, battery pack, and power consuming device of the present application will be described below by appropriately referring to the accompanying drawings.

In one embodiment of the present application, a secondary battery is provided.

Typically, a secondary battery comprises a positive electrode plate, a negative electrode plate, an electrolyte and a separator. During a charge/discharge process of the battery, active ions are intercalated and de-intercalated back and forth between a positive electrode plate and a negative electrode plate. The electrolyte is between the positive electrode plate and the negative electrode plate and functions for conducting ions. The separator is provided between the positive electrode plate and the negative electrode plate, and mainly prevents the positive and negative electrodes from short-circuiting and enables ions to pass through.

### [Electrolyte]

The electrolyte is between the positive electrode plate and the negative electrode plate and functions for conducting ions. The type of the electrolyte is not specifically limited in the present application, and can be selected according to actual requirements. For example, the electrolyte may be in a liquid state, a gel state or an all-solid state.

In some implementations, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well known porous-structure separator with good chemical stability and mechanical stability may be selected. In some embodiments, the material of the separator may be selected from at least one of glass fibers, non-woven fabrics, polyethylene, polypropylene and polyvinylidene fluoride. The separator may be a single-layer film or a multi-layer composite film, and is not limited particularly. When the separator is a multi-layer composite film, the materials in the respective layers may be same or different, which is not limited particularly.

In some embodiments, the positive electrode plate, the negative electrode plate and the separator can be made into the electrode assembly by a winding process or a stacking process.

In some embodiments, the secondary battery may comprise an outer package. The outer package can be used to encapsulate the above-mentioned electrode assembly and electrolyte. In some implementations, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, and polybutylene succinate, etc.

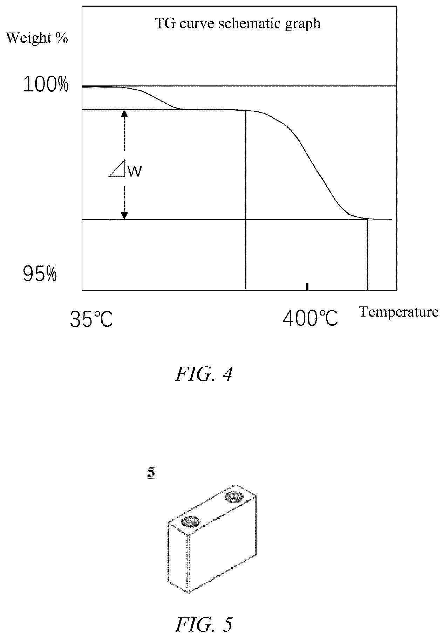

The shape of the secondary battery is not particularly limited in the present application, and may be cylindrical, square or of any other shape. For example, Fig. 5 shows a secondary battery 5 with a square structure as an example.

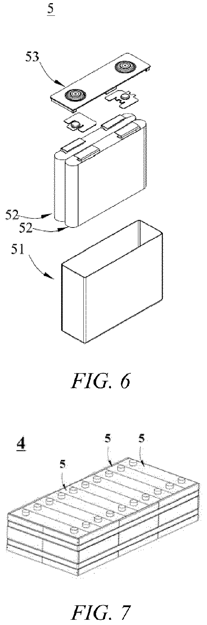

In some embodiments, referring to Fig. 6, an outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a laminating process to form an electrode assembly 52. The electrode assembly 52 is encapsulated in the accommodating cavity. The electrolyte is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 7 shows a battery module 4 as an example. Referring to Fig. 7, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

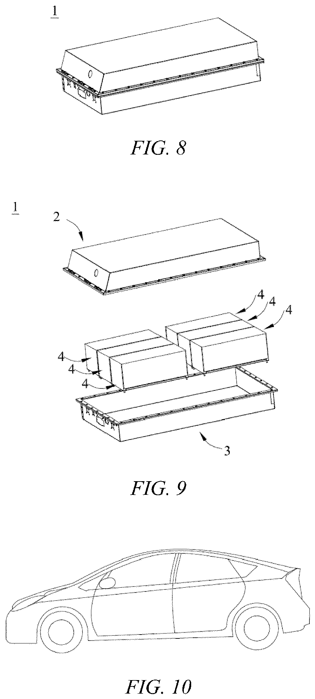

Fig. 8 and Fig. 9 show a battery pack 1 as an example. Referring to Fig. 8 and Fig. 9, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, battery module, or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, battery module or battery pack can be selected according to the usage requirements thereof.

Fig. 10 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used. As another example, the electrical apparatus may be a mobile phone, a tablet computer, a laptop computer, etc. The electrical apparatus is generally required to be thin and light, and may use the secondary battery as a power supply.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

### 1. Preparation of electrode plate

During the preparation of an electrode plate, a commercially available copper substrate is coated with a slurry comprising a first binder for forming a binding layer (abbreviated as "binding layer slurry") and a slurry comprising a multi-component copolymer and an optional second binder for forming a barrier layer (abbreviated as "barrier layer slurry") in sequence, by the methods and conditions as shown in the tables below. Afterwards, the substrate coated with the various slurries is dried to obtain a multilayer electrode plate. The specific operations are as follows:

### (1) Preparation of slurry

To a negative electrode graphite slurry, SBR is added and then mixed, to prepare a slurry for forming a binding layer (abbreviated as "binding layer slurry"); to a negative electrode graphite slurry, a linear multi-component copolymer and an optional second binder are added and then mixed, to form a slurry for forming a barrier layer (abbreviated as "barrier layer slurry"). In the binding layer slurry, a wight ratio of graphite : the first binder : an auxiliary agent is 97.55 : 0.5 : 1.95 - 94.85 : 3.2 : 1.95; and in the barrier layer slurry, a wight ratio of graphite : (the multi-component copolymer and an optional second binder) : an auxiliary agent is 97.55 : 0.5 : 1.95 - 94.85 : 3.2 : 1.95.

Each slurry also contains a dispersion medium, and the viscosity of each slurry is adjusted to a viscosity suitable for spray coating by using the dispersion medium.

### (2) Slurry coating

A binding layer slurry is spray-coated onto the substrate to form a first binding layer, and then a barrier layer slurry is coated onto the first binding layer to form a first barrier layer. During the formation of the multiple binding layers and barrier layers, a binding layer slurry containing a required amount of a first binder and a barrier layer slurry containing a required amount of a multi-component copolymer and a second binder are alternately spray-coated, until the specified number of layers is reached.

It should be noted that the fold of the thickness of each layer relative to the basic unit thickness is shown in the table. The basic unit thickness may vary among various examples and comparative examples. Also, it can be considered that the thickness ratio between the layers in the electrode plate after drying is approximately equal to the thickness ratio of the coating amount of each layer.

### (3) Slurry drying

After the completion of the slurry coating, the substrate and the slurry are dried in a 60 m tunnel-type oven at a conveying speed of 90 m/min with a baking temperature of 110-140°C. A multilayer electrode plate is thus formed. In such a case, a coating weight ratio of the binding layer to the barrier layer is as shown in the table.

**[Table 1]**

| | Binding layer | Barrier layer | | | Coating weight ratio (thickness ratio) of binding layer to barrier layer | Number of binding layers (n) | Number of barrier layers (m) | Binder content in first binding layer | Fold of thickness of first binding layer | Total content of multipolymer and binder in first barrier layer | Fold of thickness of first barrier layer | Binder content in second binding layer | Fold of thickness of second binding layer | Total content of multipolymer and binder in second barrier layer | Fold of thickness of second binding layer | Binder content in third binding layer | Fold of thickness of third binding layer |
|---|---|---|---|---|---|---|---|---|---|---|---|---|---|---|---|---|---|
| | Type of first binder | Type multi-component copolymer | Type of second binder | Amount ratio of multi-component copolymer to second binder | | | | | | | | | | | | | |
| Example 1 | SBR | Multi-component copolymer | - | - | 5 : 5 | 1 | 1 | 1.80% | 10 | 1.30% | 10 | - | - | - | - | - | - |
| Example 2 | SBR | Multi-component copolymer | SBR | - | 5 : 5 | 1 | 1 | 0.50% | 10 | 2.60% | 10 | - | - | - | - | - | - |
| Example 3 | SBR | Multi-component copolymer | SBR | - | 5:5 | 1 | 1 | 3.10% | 10 | 0.10% | 10 | - | - | - | - | - | - |
| Example 4 | SBR | Multi-component copolymer | SBR | - | 5 : 5 | 2 | 2 | 1.80% | 5 | 1.30% | 5 | 1.80% | 5 | 0.50% | 5 | - | - |
| Example 5 | SBR | Multi-component copolymer | SBR | - | 5:5 | 2 | 2 | 1.80% | 5 | 1.30% | 7 | 1.80 % | 5 | 3.10% | 3 | - | - |
| Example 6 | SBR | Multi-component copolymer | SBR | - | 5:5 | 3 | 2 | 1.8094, | 3 | 1.30% | 5 | 1.80% | 4 | 1.30% | 5 | 1.80% | 3 |
| Example 7 | SBR | Multi-component copolymer | SBR | - | 7: 3 | 2 | 2 | 1.80% | 7 | 1.30% | 3 | 1.80 % | 7 | 1.30% | 3 | - | - |
| Example 8 | SBR | Multi-component copolymer | SBR | - | 6:4 | 2 | 2 | 1.80% | 6 | 1.30% | 4 | 1.80% | 6 | 1.30% | 4 | - | - |
| Example 9 | SBR | Multi-component copolymer | SBR | - | 4:6 | 2 | 2 | 1.80% | 4 | 1.30% | 6 | 1.80% | 4 | 1.30% | 6 | - | - |
| Example 10 | SBR | Multi-component copolymer | SBR | - | 3 : 7 | 2 | 2 | 1.80% | 3 | 1.30% | 7 | 1.80% | 3 | 1.30% | 7 | - | - |
| Example 11 | SPR | Multi-component copolymer | SPR | 2.6:1 | 5 : 5 | 2 | 2 | 1.80% | 5 | 1.30% | 5 | 1.80% | 5 | 1.30% | 5 | | |
| Comparative example 1 | SBR | - | - | - | 10:0 | 2 | 0 | 1.80% | 10 | - | - | 1.30% | 10 | - | - | - | - |
| Comparative example 2 | SBR | - | - | - | 10 0 | 2 | 0 | 0.50% | 10 | - | - | 2.60% | 10 | - | - | - | - |
| Comparative example 3 | SBR | - | - | - | 1() 0 | 2 | 0 | 2.60% | 10 | - | - | 0.50% | 10 | - | - | - | - |

| | | | | | | | | | | | | | | | | | |
|---|---|---|---|---|---|---|---|---|---|---|---|---|---|---|---|---|---|
| SBR: Styrene-butadiene rubber polymer SPR: Styrene-propadiene rubber polymer | | | | | | | | | | | | | | | | | |

### 2. Performance evaluation

The performance of the electrode plate is evaluated in the following manner.

### (1) Binder floating test

After having been dried, the electrode plate is cooled to room temperature, the total thickness of the binding layer and the barrier layer is divided into three equal portions in the thickness direction, and the thickness of the one third portion closest to the surface is collected as an upper layer sample; and the thickness of the one third portion closest to the substrate is collected as an lower layer sample. About 50 mg of the powder of the upper layer sample or the lower layer sample is accurately weighed and placed into a test dish, and the thermal weight loss of the sample is measured by a TG measuring instrument manufactured by the NETZSCH company.

TG test conditions: temperature increase: 35°C → 630°C, temperature increase rate: 10 K/min, atmosphere: N₂/N₂.

As shown in Fig. 4, an obvious weight loss ( 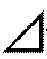 w) observed around 400°C in the heating curve is used as the content of the binder and the multi-component copolymer, and the weight of the sample at the beginning of the heating curve is used as a reference to calculate the content of the binder and the multi-component copolymer. Table 2 shows the ratio of the binder content contained in the upper and lower layers of examples and comparative examples, and the percentage relative to comparative example 1.

### (2) Test of binding strength of electrode plate

### Sample preparation

A special double-sided adhesive tape with a size of 20 mm width × 90 - 150 mm length is adhered onto a steel plate, and an electrode plate with a size of 30 mm width × 160 mm length is cut and adhered on the double-sided adhesive tape, and then rolled three times in the same direction with a press roller.

### Test of binding force

The steel plate is fixed with a lower clamping head of a tensile machine, and the electrode plate is fixed with an upper clamping head, and then a pre-stretching (5-10 mm) is carried out at a tensile speed of 50 mm/min by the 180° peeling method. The state after the pre-stretching is referred to as "zero point", and then the main stretching is started, and the stretching is stopped after the main stretching is 45-50 mm. The evaluation results are also shown in Table 2.

**[Table 2]**

| | Ratio of upper to lower layer binder | Percentage of upper and lower layer binder (with comparative example 1 as 100%) | Evaluation of electrode plate binding strength (N/m) |
|---|---|---|---|
| Example 1 | 1.54 | 85% | 9.044 |
| Example 2 | 2.02 | 111% | 6.920 |
| Example 3 | 0.68 | 37% | 12.483 |
| Example 4 | 1.34 | 74% | 9.560 |
| Example 5 | 1.27 | 70% | 9.835 |
| Example 6 | 1.14 | 63% | 10.014 |
| Example 7 | 0.80 | 44% | 11.645 |
| Example 8 | 1.05 | 58% | 10.317 |
| Example 9 | 1.57 | 86% | 8.534 |
| Example 10 | 1.52 | 84% | 8.490 |
| Example 11 | 1.66 | 92% | 8.045 |
| Comparative example 1 | 1.82 | 100% | 7.299 |
| Comparative example 2 | 2.85 | 157% | 6.038 |
| Comparative example 3 | 1.53 | 84% | 8.868 |

It can be seen from the above table 2 that compared with the existing electrode plate, the electrode plate of the present invention can inhibit the floating of the binder, and improve the binding strength between the substrate and the binding layer in the electrode plate. Specifically, by comparing examples 1 to 3 with comparative examples 1 to 3, it can be seen that under the same coating conditions, the electrode plate with a barrier layer of the present invention can inhibit the floating of the binder, and improves the binding strength between the substrate and the binder layer. Furthermore, it can also be seen from the examples that, in the case of providing multiple barrier layers, the tendency of the binder to float is also sufficiently inhibited, and the binding strength is improved.

## Claims

1. A multilayer electrode plate, **characterized in that**
the electrode plate comprises a substrate, at least one binding layer and at least one barrier layer laminated in sequence on the substrate, wherein the binding layer and the barrier layer are distributed alternately in the thickness direction;
the binding layer comprises a first binder; and
the barrier layer comprises a multi-component copolymer different from the first binder and an optional second binder, identical to or different from the first binder in the binding layer, wherein the multi-component copolymer can be a linear multi-component copolymer; optionally, the linear multi-component copolymer is a copolymer comprising at least one monomer of acrylonitrile, acrylic acid and allyl ester obtained by co-polymerisation.

2. The multilayer electrode plate of claim 1, **characterized by**
comprising one said binding layer and one said barrier layer, with the barrier layer being provided on the outside of the binding layer.

3. The multilayer electrode plate of claim 1 or 2, **characterized in that**
the first binder and the second binder each are independently selected from at least one of styrene-butadiene rubber polymers, and styrene-propadiene rubbers.

4. The multilayer electrode plate of any one of claims 1-3, **characterized in that**
in the binding layer, the first binder has a content of 0.5 - 3.1 wt%, optionally 1.3 - 1.8 wt%,
in the barrier layer, the multi-component copolymer and the optional second binder have a total content of 0.5 - 3.1 wt%, optionally 1.3 - 2.6 wt%.

5. The multilayer electrode plate of any one of claims 1-4, **characterized in that**
a ratio of the weight of the first binder in the binding layer, relative to the total weight of the multi-component copolymer and the optional second binder in the barrier layer is 0.5 : 2.6 - 3.1 : 0.1, optionallyl.8 : 1.3.

6. The multilayer electrode plate of any one of claims 1-5, **characterized in that**
a coating weight ratio of the binding layer to the barrier layer is 3 : 7 - 7 : 3, optionally 4 : 6 - 6 : 4.

7. The multilayer electrode plate of any one of claims 1-6, **characterized in that**
in the barrier layer, a weight ratio of the multi-component copolymer to the second binder is 1 or more, optionally 2.5 or more.

8. A negative electrode, **characterized by**
comprising a multilayer electrode plate of any one of claims 1-7.

9. A secondary battery, **characterized by**
comprising a negative electrode of claim 8.

10. A battery module, **characterized by** comprising a secondary battery of claim 9.

11. A battery pack, **characterized by** comprising a battery module of claim 10.

12. A power consuming device, **characterized by** comprising at least one selected from a secondary battery of claim 9, a battery module of claim 10, or a battery pack of claim 11.
